# EUROPEAN PATENT APPLICATION

(11) **EP 3 933 355 A1**
(43) Date of publication of application: **05.01.2022**
(21) Application number: 20183124.5
(22) Date of filing: 30.06.2020
(51) Int. Cl.: G01H 1/00, F04D 27/00, F04D 27/02, G05B 23/02

(54) **A METHOD FOR MONITORING OPERATING CONDITION OF A ROTATING EQUIPMENT**

(71) Applicant: Alfa Laval Corporate AB, 221 00 Lund (SE)
(72) Inventor: ANDERSEN, Jens Folkmar, DK-7000 FREDERICIA (DK); MADSEN, Karsten Schack, DK-5000 ODENSE C (DK); PØRKSEN, Søren, DK-7000 FREDERICIA (DK)
(74) Representative: Alfa Laval Attorneys

(57) **Abstract**

A method for monitoring operating condition of an apparatus (1) comprising a rotating equipment. The method comprises the following steps repeated at certain time intervals: recording vibration data by a vibration detecting unit (11) associated with the apparatus (1) at a certain sampling frequency, which vibration data is representative of a vibration acceleration of the rotating equipment; obtaining a frequency spectrum of the vibration data by converting the vibration data using Fourier transform operation to a representation in a frequency domain; and performing an analysis of a plurality of selected narrow individual predetermined frequency bands (61-65) of the obtained frequency spectrum for determining whether the apparatus (1) is running or not, and/or for triggering an alert when a maximal magnitude of the frequency spectrum within any of said frequency bands (61-65) exceeds a corresponding individual threshold value (21-30).

## Description

### TECHNICAL FIELD

The present disclosure relates to a method for monitoring operating condition of an apparatus comprising a rotating equipment, and a system for monitoring operating condition of said apparatus.

The apparatus may for example be a pump, such as a centrifugal pump, but the method and system are not restricted to this particular type of apparatus. In other words, the method and system may implemented and used for monitoring operation of substantially any type of apparatus having a rotatable equipment. For example, the apparatus may be any type of pump, tank agitator, tank mixer, tank internal cleaning device, or the like.

### BACKGROUND

In the field of predictive maintenance of apparatuses having internal rotating equipment, such as shafts, shaft bearings, impellers, rotors, pistons, transmission gears, etc., there is a demand for accurate and reliable monitoring of the operating condition of the apparatus for providing suitable type and timing of predictive maintenance.

It is for example known to implement vibration monitoring of an apparatus by first measuring vibration level over a period of time and subsequently triggering an alarm level when a RMS value of the overall vibration level in the time domain exceeds an alarm level. However, this type of vibration monitoring is very sensitive to vibration noise from other surrounding or adjacent equipment, and does not provide any detailed understanding of the maintenance need of a complex rotating equipment.

It is further known from publication EP 0 851 127 A2 to use a diagnostic method for a vacuum pump provided with a vibration transducer, such as an accelerometer, wherein the acquired signals are subjected to a FFT algorithm to obtain a spectral distribution, arranged in frequency order, thus achieving a signal representative of the distribution of the vibration acceleration as a function of the frequency. However, this diagnostic method involves a complex approach for identifying amplitude peaks in the spectral distribution and fails providing an easily implemented approach for converting the obtained spectral distribution into reliable and accurate predictive maintenance plan.

There is thus a need for an improved monitoring system that provides good understanding of the maintenance need of a complex rotating equipment, that has low vibration noise sensitive and that provides an easily implemented approach for converting an obtained spectral distribution into reliable and accurate predictive maintenance plan.

### SUMMARY

An object of the present disclosure is to provide a method and system for monitoring of an operating condition of an apparatus with a rotating equipment, where the previously mentioned problems are avoided. This object is at least partly achieved by the features of the independent claims.

According to a first aspect of the present disclosure, there is provided a method for monitoring operating condition of an apparatus comprising a rotating equipment. The method comprises the following steps repeated at certain time intervals: recording vibration data by a vibration detecting unit associated with the apparatus at a certain sampling frequency, which vibration data is representative of a vibration acceleration of the rotating equipment; obtaining a frequency spectrum of the vibration data by converting the vibration data using Fourier transform operation to a representation in a frequency domain; and performing an analysis of a plurality of selected narrow individual predetermined frequency bands of the obtained frequency spectrum for determining whether the apparatus is running or not, and/or for triggering an alert when a maximal magnitude of the frequency spectrum within any of said frequency bands exceeds a corresponding individual threshold value.

According to a second aspect of the present disclosure, there is provided a monitoring system for monitoring operating condition of an apparatus including a rotating equipment. The system comprises a vibration detecting unit configured for being mounted on the apparatus, and an electronic control system operatively connected to a vibration detection sensor of the vibration detecting unit. Moreover, the electronic control system is configured for performing the following steps repeated at certain time intervals: recording vibration data by the vibration detecting unit at a certain sampling frequency, which vibration data is representative of a vibration acceleration of the rotating equipment; obtaining a frequency spectrum of the vibration data by converting the vibration data using Fourier transform operation to a representation in a frequency domain; and performing an analysis of a plurality of selected narrow individual predetermined frequency bands of the obtained frequency spectrum for determining whether the apparatus is running or not, or for triggering an alert when a maximal magnitude of the frequency spectrum within any of said frequency bands exceeds a corresponding individual threshold value.

In this way, it becomes possible to detect and monitoring vibration amplitudes of individual parts of the apparatus in a straightforward and non-complex manner, thereby enabling monitoring a number of starts and stops, and running hours, of an apparatus, as well as implementing and continuously updating a predictive maintenance plan based on vibration alert levels, and the selected narrow individual predetermined frequency bands enables improved vibration noise filtering.

Further advantages are achieved by implementing one or several of the features of the dependent claims.

In some example embodiments, the method involves monitoring total accumulated number of operation starts and/or total accumulated operating time of the apparatus, wherein the step of performing an analysis of a plurality of narrow individual predetermined frequency bands involves: performing a matching analysis of the obtained frequency spectrum within the plurality of narrow individual predetermined frequency bands for determining whether the obtained frequency spectrum corresponds to a frequency spectrum of the apparatus for determining whether the apparatus is running or not, and wherein the method further comprises a step of updating the total accumulated number of operation starts and/or total accumulated operating time of the apparatus based on the result of matching analysis. Thereby, the risk that the apparatus is incorrectly deemed running when it is actually stopped, due to vibration noise, is reduced.

In some example embodiments, the step of performing the matching analysis of the obtained frequency spectrum within the plurality of narrow individual predetermined frequency bands for determining whether the obtained frequency spectrum corresponds to a frequency spectrum of the apparatus involves comparing, for each of the plurality of narrow individual predetermined frequency bands of the frequency spectrum, the maximal magnitude of the frequency spectrum within the specific frequency band with a corresponding individual magnitude range, and determining that the apparatus is running when all said maximal magnitudes of the frequency spectrum are located within the corresponding individual magnitude range, and determining that the apparatus is not running when any of said maximal magnitudes of the frequency spectrum are located outside of the corresponding individual magnitude range. The magnitude range of the frequency spectrum within the individual frequency bands is a powerful tool for pattern recognition and evaluation of an obtained frequency spectrum.

In some example embodiments, a position of upper and lower magnitude threshold levels of each individual magnitude range of the frequency spectrum is determined based on noise-free or noise-attenuated environment vibration data. Thereby, the noise vibration may be more easily detected and disregarded.

In some example embodiments, the corresponding individual magnitude range, for each of the plurality of narrow individual predetermined frequency bands of the frequency spectrum, is centred on the maximal magnitude of the frequency spectrum, as derived from said noise-free or noise-attenuated environment vibration data. Thereby, a robust handling and filtering of vibration noise is accomplished.

In some example embodiments, the step of performing an analysis of a plurality of narrow individual predetermined frequency bands involves: comparing, for each of the plurality of narrow individual predetermined frequency bands of the frequency spectrum, the maximal magnitude of the frequency spectrum within the specific frequency band with a corresponding individual threshold value, and triggering an alert when any of said maximal magnitudes of the frequency spectrum exceeds a corresponding individual threshold value. Thereby, vibration monitoring of individual part with individual sensitivity of the apparatus may be accomplished.

In some example embodiments, at least one of the plurality of narrow individual predetermined frequency bands is associated with at least a first corresponding individual threshold value reflecting a first level of maintenance urgency, and a second corresponding individual threshold value reflecting a second level of maintenance urgency that is more urgent than the first level, wherein the method comprises triggering a first type of alert reflecting a relative low level of maintenance urgency when the maximal magnitude of the frequency spectrum within the specific frequency band exceeds the first corresponding individual threshold value, and wherein the method comprises triggering a second type of alert reflecting a relative high level of maintenance urgency when the maximal magnitude of the frequency spectrum within the specific frequency band exceeds the second corresponding individual threshold value. Thereby, a more elaborated and cost-efficient predictive maintenance plan may be provided, because the level of urgency is more detailed and with higher resolution.

In some example embodiments, the method comprises selecting the narrow individual predetermined frequency bands to match at least two, specifically at least three, and more specifically at least four, magnitude peaks of the frequency spectrum as derived from noise-free or noise-attenuated environment vibration data. The magnitude peaks are suitable for pattern recognition of frequency spectrum because they are less sensitive to noise vibration.

In some example embodiments, the method comprises selecting at least two, specifically at least three, and more specifically at least four, narrow individual predetermined frequency bands. More frequency bands generally enables a more reliable and accurate pattern recognition of a frequency spectrum.

In some example embodiments, each selected narrow frequency band has a width of 5 - 100 Hz, specifically 7 - 75 Hz, and more specifically 10 - 50 Hz. Narrow frequency bands generally provides improved noise vibration filtering compared with wide frequency bands.

In some example embodiments, the method comprises selecting the narrow individual predetermined frequency bands to match the operating vibration frequency generated by at least two, specifically at least three, and more specifically at least four, individual parts of the rotating equipment. Thereby, monitoring of individual parts of the apparatus is accomplished.

In some example embodiments, the method comprises adjusting the location of the plurality of selected narrow individual predetermined frequency bands of the obtained frequency spectrum as a function of rotational speed of the rotating equipment of the apparatus. Thereby, a more accurate and reliable monitoring of the operating condition is accomplished.

In some example embodiments, the method comprises adjusting the corresponding individual threshold value(s) of each narrow individual predetermined frequency bands as a function of a variable operating setting of the apparatus, in particular as a function of a variable operating load of the apparatus. Thereby, a more accurate and reliable monitoring of the operating condition is accomplished.

In some example embodiments, the method further comprises ignoring the part or parts of the obtained frequency spectrum that are located outside the plurality of selected narrow individual predetermined frequency bands. Thereby, improved noise vibration filtering is accomplished.

The disclosure also relates to an apparatus including a rotating equipment and comprising a monitoring system as described above.

Further features and advantages of the invention will become apparent when studying the appended claims and the following description. The skilled person in the art realizes that different features of the present disclosure may be combined to create embodiments other than those explicitly described hereinabove and below, without departing from the scope of the present disclosure.

### BRIEF DESCRIPTION OF DRAWINGS

The disclosure will be described in detail in the following, with reference to the attached drawings, in which
- Fig. 1: shows schematically a perspective view of a pump having a vibration detection unit according to the disclosure,
- Fig. 2: shows schematically a cross-section of a pump of figure 1,
- Fig. 3: shows schematically an overview of a system for monitoring operating condition of an apparatus having a rotating equipment according to the disclosure,
- Fig. 4: shows schematically a vibration sensing signal in the time domain,
- Fig. 5: shows schematically a frequency spectrum of a sensing signal after conversion to the frequency domain,
- Fig. 6: shows schematically a frequency spectrum of a sensing signal including a plurality of narrow individual predetermined frequency bands,,
- Fig. 7-9: show schematically various flow charts of the method according to the disclosure,
- Fig. 10: shows schematically a frequency spectrum of a sensing signal including magnitude ranges,
- Fig. 11: shows schematically a set of frames arranged in the frequency domain,
- Fig. 12: shows schematically a frequency spectrum of a vibration noise signal,
- Fig. 13: shows schematically a frequency spectrum of a mixed sensing signal and noise signal,
- Fig. 14: shows schematically a frequency spectrum of a sensing signal including multiple vibration alert threshold levels, and
- Fig. 15: shows schematically a frequency spectrum of a sensing signal of a reduced speed apparatus.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure.

As mentioned above, vibration monitoring has been used for condition monitoring of machinery and gears for several years. E.g. for large compressors and wind mill gears where a breakdown can be associated with significant costs.

Automated systems for continuous vibration monitoring of rotating equipment is known, wherein the system measures vibration level over a period of time and based on these measurements sets an alarm level. However, this alarm level is for the RMS (Root Mean Square) value of the overall vibration level in the time domain, thereby including not only all frequencies from the rotating equipment in one curve, but also all detected vibration noise from adjacent vibrating equipment. RMS is a positive mean value for representing the otherwise both negative and positive amplitude of the vibration where the average would be zero.

Clearly, this type of prior art vibration monitoring system has some major disadvantages. For example, the RMS value on which the alarm is based gives only information on the overall vibration of the system. So, in case of an alarm, it can only be concluded that the entire system vibrates more than acceptable, but not which part of the system that causes the vibration. Consequently, since different parts of a system like e.g. a pump will vibrate at different frequencies and amplitudes the parts that has the largest amplitude will contribute the most to the total vibration level and thereby the RMS value. However, these parts may not be the ones most sensitive to vibration and not the most critical ones. Consequently, highly sensitive parts, where even a low level of vibration can be critical, may be overlooked. Such parts can still be damaged due to vibration without being detected by a vibration monitor having an alarm level based on the RMS value only.

Moreover, a diagnostic method involving an FFT algorithm for converting a signal from a vibration transducer to a spectral distribution is known, but without providing an easily implemented approach for converting the obtained spectral distribution into reliable and accurate predictive maintenance plan.

The present disclosure describes a new method for how collected vibration data for various equipment, when combined with an FFT analysis and general equipment and process knowledge, can be used for monitoring and evaluating the condition of specific parts of the equipment, and how different threshold vibration levels can be applied for different parts of an equipment. The aim is to be able to specify not just that a piece of equipment vibrates but to be able to specify exactly which part of the equipment that exceeds its individually set threshold value. Thereby it becomes possible to monitor not just the entire system, but also smaller lightweight parts that vibrates with a low amplitude compared to other parts of the system.

FFT analysis (Fast Fourier Transformation) is a mathematical method that transforms the overall vibration from the time domain into vibration levels (magnitude) in the frequency domain, i.e. at the various frequencies acting in the system. In other words, the resulting frequency spectrum of the Fourier transform provides an amplitude distribution of the vibration acceleration as a function of frequency.

In addition, the disclosure also relates to a new method for how collected vibration data for various equipment, when combined with an FFT analysis, can be used for identifying if equipment is running or not, and thereby not only monitoring accumulated total running hours of the apparatus, but also monitoring the total accumulated number of starts and stops.

Not only running hours are important for the status of e.g. a shaft seal in a pump and the service interval. Also the number of start and stops within the running hours are highly important for the service interval. Specifically, the number of start and stops are important for especially the shaft seal wear. When a pump is started the shaft seal is initially running dry for a short period of time. This causes more wear than running continuously for a longer period of time.

Consequently, by logging both the number of start and stops and the total running hours a more qualified estimate of recommended service intervals can be given. E.g. if a given service interval is set in the condition monitor app, this interval can automatically be reduced if the number of start and stops for some reason is increased.

Moreover, the possibility to monitor whether a rotating equipment is rotating or not may be an important parameter when the rotating device is hidden and no other sensors are available for detecting rotation, such as for example magnetically coupled tank mixers. Such devices typically include a motor that drives a magnetic rotor and is arranged on an exterior surface of a mixing tank, wherein an magnetic impeller is arranged on the inside of the mixing tank and magnetically drivingly coupled to the rotor, such that the impeller rotates via magnetic coupling when the rotor rotates. However, in case the impeller for same reason get stuck and does not rotate together with the rotor, the mixing of the product within the mixing tank is impaired and may result in degraded product. Hence, for ensuring high quality, monitoring whether a rotating equipment is rotating or not is an important parameter.

The method for monitoring the operating condition of an apparatus including a rotating equipment will be described in the context of a centrifugal pump. However, the method according to the disclosure can be used for monitoring all types of apparatuses including a rotating equipment.

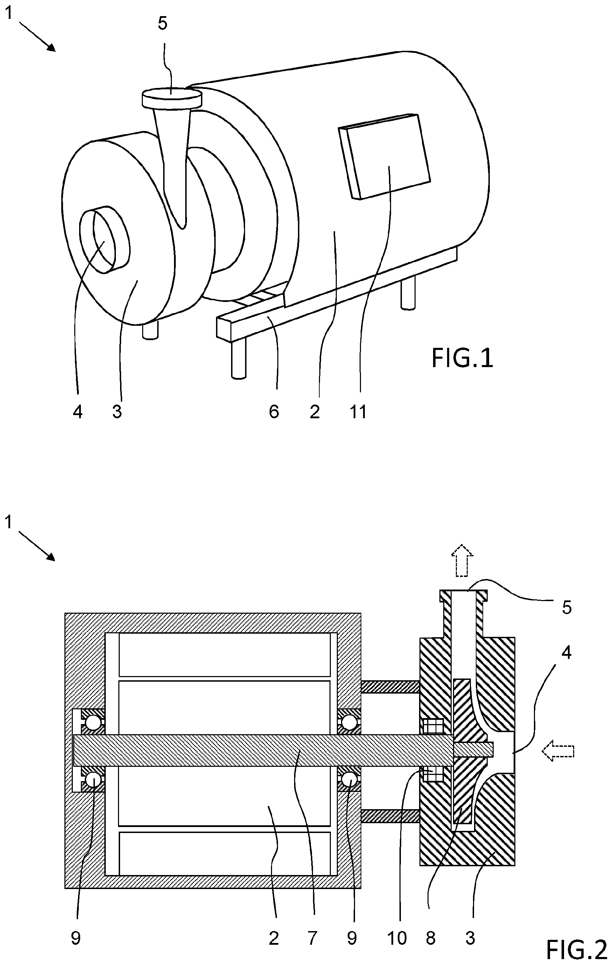

Figure 1 shows schematically a perspective view of a centrifugal pump 1, and figure 2 shows schematically a cross-section of a centrifugal pump 1. The centrifugal pump 1 has a motor 2, such as for example an electrical motor. A drive shaft 7 of the motor 2 is drivingly connected with an impeller 8 arranged within a stationary pump housing 3. The pump housing 3 has an inlet port 4 and an outlet port 5, and the impeller 8 generates a flow of a fluid product from the inlet port 4, through the pump housing 3, and out through the outlet port 5, when the motor 2 drives the impeller. The centrifugal pump 1 is here mounted on a frame 6 for stationary and stable attachment to an underlying support structure.

The apparatus 1, e.g. the centrifugal pump, comprises a rotating equipment in form of the drive shaft 7 with associated roller bearings 9 and the impeller 8. A shaft seal 10 is typically included for ensuring leak-tightness at a hole of the pump housing 3 where the drive shaft 7 enters.

A vibration detection unit 11 is fastened to the centrifugal pump 1, for example on an exterior surface of the motor 2, as illustrated in figure 1, or on an exterior surface of the pump housing 3, or the like. A structurally stable and secure connection of the vibration detection unit 11 to the a rigid part of the centrifugal pump 1 is advantageous for enabling proper detection of the vibration acceleration generated by the apparatus.

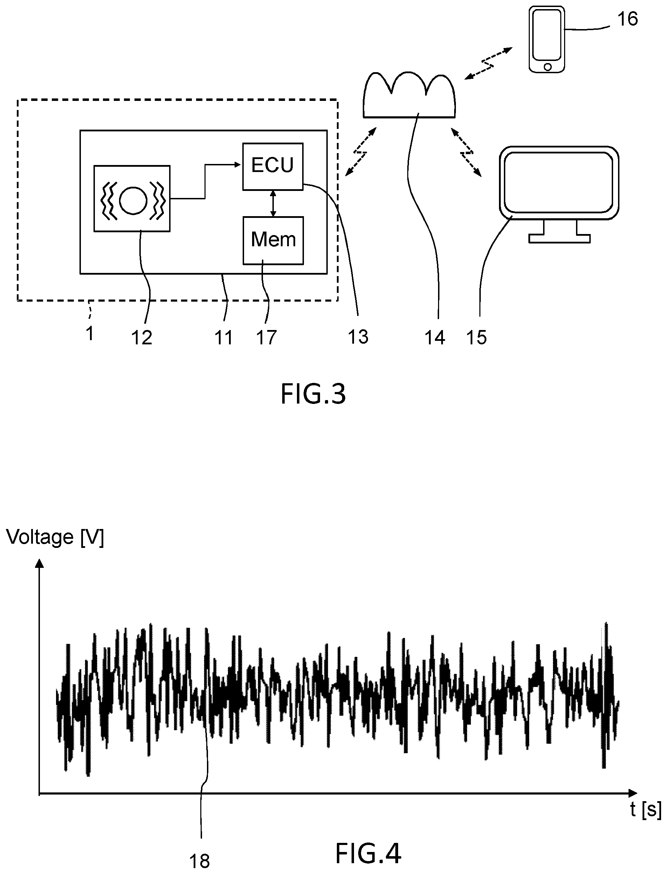

With reference to figure 3, the vibration detection unit 11 may for example include a vibration detection sensor 12, such as an acceleration sensor 12, for detecting vibration acceleration, and an electronic controller 13 programmed for receiving a sensing signal from the acceleration sensor 12 and for recording this signal over time, for example by sampling the sensing signal using a suitable samplings frequency. The recorded signal may for example be stored in a local data memory 17. The FFT analysis may for example be performed directly by the electronic controller 13, or remotely by a cloud computing application 14, or the like.

A user, such as for example a maintenance engineer, may thus, by means of a computer monitor 15 or mobile computing device 16 that is connected to the cloud computing application 14 or directly to the vibration detection unit 11, monitor the operating condition of the apparatus 1, monitor vibration levels of individual components of the apparatus 1, monitor number of starts/stops and operating hours of the apparatus 1, receive alerts relating to high vibration level of individual components of the apparatus, and/or interact with a predictive maintenance software that may be continuously updated based on new vibration data from the vibration detection unit 11.

Figure 4 shows schematically an example pattern of continuous sensing signal as received from the acceleration sensor 12 and recorded by the electronic controller 13. The signal may be an electric signal with a voltage level varying overtime as a function of detected level of vibration acceleration.

The length of a single individual recording may for example be about 1 - 10 seconds, depending on selected samplings frequency, and the individual recordings may be repeated with a regular time interval of for example 1 - 10 minutes for collecting sufficient information for providing a reliable and accurate operating condition information.

Figure 4 shows schematically an example of single individual recording of a sensing signal 18 as received from the acceleration sensor 12 during operation of the pump 1. The recording may for example have a length of about 5 seconds, and the sensing signal 18 is thus presented in the time domain. The sensing signal 18 is here in provided in form of voltage as a function of vibration acceleration.

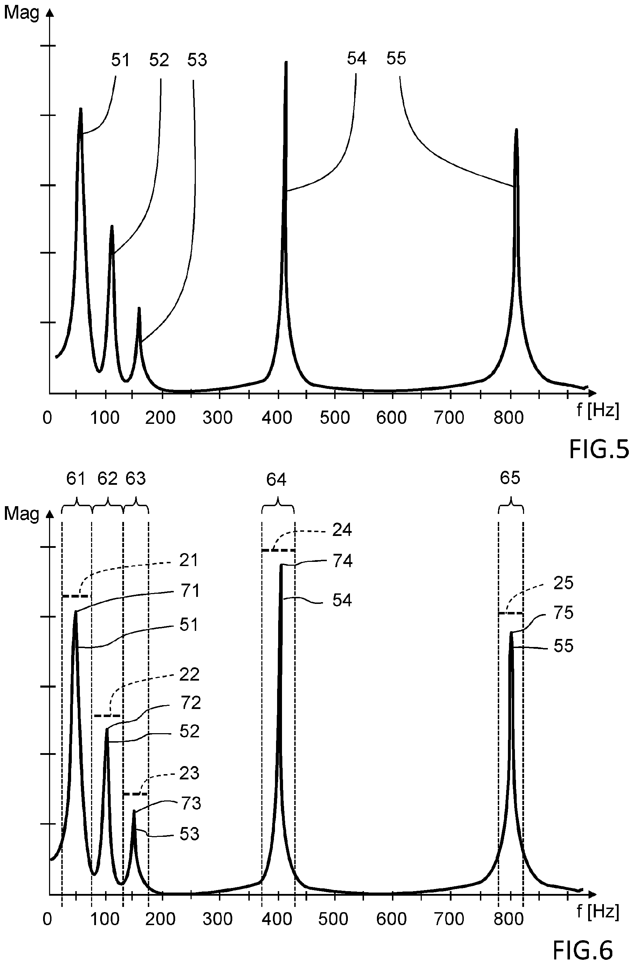

Figure 5 shows schematically a frequency spectrum of the single individual recording of a sensing signal 18 of figure 4 after a Fourier transform operation has been performed on said single individual recording of a sensing signal 18 for converting the sensing signal 18 from the time domain to the frequency domain. In a frequency spectrum, the x-axis represent frequencies of the single individual recorded sensing signal, and y-axis represent the magnitude of the single individual recorded sensing signal 18 at the various frequencies. The sensing signal 18 is thus presented having a certain pattern in the frequency domain, i.e. having peaks at certain locations. Each of these peaks indicate that the apparatus generates relatively strong vibrations in the frequency associated with each peak.

The Fourier transform operation may for example be performed by means of Fast Fourier transform (FFT), which is an algorithm that computes the discrete Fourier transform (DFT) of a sequence.

The frequency spectrum may be used in combination with knowledge of the structural composition of the rotating equipment of the apparatus to determine which part of the equipment that vibrates with which magnitude. For example, if the pump rotates with a speed of 3000 rpm, the natural frequency of the system may be determined by dividing with 60 to get the rotations per second. Hence, the natural frequency for the system = 50 Hz and corresponds to a first peak 51 in figure 5. A 2^{nd} harmonic is 2 x the natural frequency = 100 Hz and corresponds to a second peak 52 in figure 5, and a 3^{rd} harmonic is 3 x the natural frequency = 150 Hz and corresponds to a third peak 53 in figure 5.

Moreover, if the impeller has e.g. 8 wings the frequency associated with the impeller will be 8 x 50 = 400 Hz and corresponds to a fourth peak 54 in figure 5.

Even the shaft seal will have its own frequency = 800 Hz and corresponds to a fifth peak 55 in figure 5.

Similarly, the bearings will have a frequency at 8 x the number of balls in the bearing (not shown).

Consequently, knowledge about the running condition for a pump and motor makes it possible to determine which frequencies on the FFT curve, i.e. the frequency spectrum, that is caused by which part of the equipment.

This approach for correlating peaks in the frequency spectrum with specific parts of the rotating equipment can also be used for a motor equipped with variable rotational speed, because variation in rotational speed will cause a corresponding change in the natural frequency of the system, as calculated above. However, the relative relation between the peaks on the FFT curve will remain the same, and the entire FFT curve will thus simply be offset along the frequency axis.

By being able to tell exactly which part of an apparatus having a rotating equipment that causes which vibration peaks enables a more detailed and accurate interpretation of the vibration data and thereby improved monitoring tools and advice regarding operating status and predictive maintenance of individual parts of the apparatus.

According to some example embodiments, it is for example possible to set individual vibration alarm levels for different parts of the apparatus 1. Thereby, a vibration alarm level for a sensitive and/or critical part can be set relatively low for avoiding unplanned shutdown of the apparatus due to failure or breakdown of said sensitive and/or critical part, whereas the vibration alarm level for a more robust part can set relatively high, thereby allowing a large increase in vibration level before a warning or alarm is triggered. In other words, by this method it is ensured that not just the high mass and heavy vibrating parts of the apparatus is monitored, but also the light weight low amplitude parts.

In addition, as mentioned above, frequency spectrum may be used for more reliably detecting whether a rotating equipment of an apparatus is running or not, and thereby not only monitoring accumulated total running hours of the apparatus, but also monitoring the total accumulated number of starts and stops, which is important for determining wear of seal or similar parts that are specifically sensitive to start and/or stop events. Specifically, the frequency spectrum of a running apparatus, e.g. the location and magnitudes of the peaks of the frequency spectrum, is typically very individual and unique for each type of apparatus, and this unique frequency pattern may be used for determining whether the associated apparatus is running or not simply be checking if said unique frequency pattern can be identified in a recording of the sensing signal 18 from the acceleration sensor 12. If yes, the apparatus 1 is highly likely running. If no, the apparatus 1 is highly likely stopped.

Since the uniqueness of a frequency spectrum of a running apparatus may be characterised by means of the location and magnitudes of the peaks of the frequency spectrum, a plurality of narrow individual predetermined frequency bands are selected to overlap said peaks.

Specifically, with reference to figure 6, which shows an example embodiment of plurality of narrow individual predetermined frequency bands, a first frequency band 61 having a first width is arranged overlapping with the first peak 51, a second frequency band 62 having a second width is arranged overlapping with the second peak 52, a third frequency band 63 having a third width is arranged overlapping with the third peak 53, a fourth frequency band 64 having a fourth width is arranged overlapping with the fourth peak 54, and a fifth frequency band 65 having a fifth width is arranged overlapping with the fifth peak 55.

Each of the first to fifth width may be selected individually according to the shape of each individual peak, or may simply be set to a value, such as a width of 5 - 100 Hz, specifically 7 - 75 Hz, and more specifically 10 - 50 Hz. The term narrow herein refers to a width of the individual predetermined frequency bands that is relatively small with respect to a frequency range stretching from the frequency of the lowest peak to the frequency of the highest peak, i.e. about 750 Hz in the example of figure 6. For example less than 20% of said frequency range.

The first the fifth frequency bands 61-65 may then also suitably be used for monitoring the vibration level of relevant individual parts of the apparatus by setting individual threshold values for the magnitude of each frequency band 61-65.

For example, a first individual threshold value 21 may be provided associated with the first frequency band 61, a second individual threshold value 22 may be provided associated with the second frequency band 62, a third individual threshold value 23 may be provided associated with the third frequency band 63, a fourth individual threshold value 24 may be provided associated with the fourth frequency band 64, and a fifth individual threshold value 25 may be provided associated with the fifth frequency band 65.

Clearly, the number of frequency bands and level of associated individual threshold values may differ from the example of figure 6, and may suitable be selected according to the specific circumstance of each implementation. Moreover, number of frequency bands are not necessarily selected to match the number of peaks, as shown in the example embodiment of figure 6. In other example embodiments, the number of selected frequency bands may be more or less than the number of peaks.

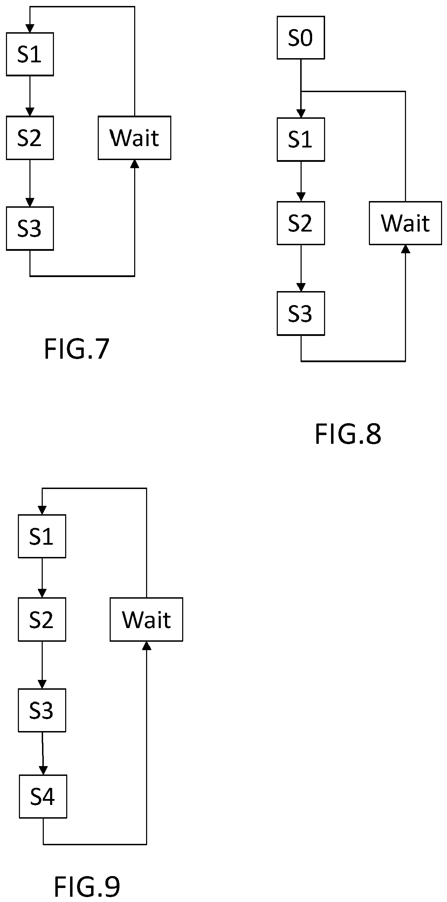

Consequently, the method for monitoring operating condition of an apparatus 1 comprising a rotating equipment may be deemed including the following three main step, which are described with reference to the flowchart of figure 7. The method comprises a first step S1 of recording vibration data by the vibration detecting unit 11 associated with the apparatus 1 at a certain sampling frequency, which vibration data is representative of a vibration acceleration of the rotating equipment. The method further comprises a second step S2 of obtaining a frequency spectrum of the vibration data by converting the vibration data using Fourier transform operation to a representation in a frequency domain. Finally, the method comprises a third step S3 of performing an analysis of a plurality of selected narrow individual predetermined frequency bands of the obtained frequency spectrum for determining whether the apparatus is running or not, and/or for triggering an alert when a maximal magnitude of the frequency spectrum within any of said frequency bands exceeds a corresponding individual threshold value. The method then waits for a certain time interval before repeating steps S1 - S3 again.

In other words, the sequence of method steps S1 - S3 is performed repeatedly at certain regular or non-regular time intervals, thereby enabling monitoring of total accumulated operating time and/or for continuously monitoring vibration levels and triggering alert when the measured vibration level in any of the selected frequency bands exceeds a corresponding individual threshold value.

The method typically additionally involves an initialisation step S0, as illustrated in figure 8, involving selecting said narrow individual predetermined frequency bands to match the operating vibration frequency generated by at least two, specifically at least three, and more specifically at least four, individual parts of the rotating equipment.

When the monitoring is intended for alerting, triggering maintenance or managing and updating a predictive maintenance plan, the frequency bands are typically to match at least those individual parts of the apparatus that are relevant to monitor from a maintenance perspective, i.e. parts that are typically replaced due to wear or aging, such as seals, bearings, impellers, etc.

The number of selected individual predetermined frequency bands depends on the purpose of the monitoring and/or complexity of apparatus. When monitoring for example number of start/stops or operating hours, it is relevant to reliably detect operation of the apparatus. Depending on vibration noise levels, a single narrow individual predetermined frequency band may be insufficient for reliably detecting the vibration characteristic of the apparatus, and a plurality of individual predetermined frequency bands may be required.

The initialisation step S0 may thus involve selecting at least two, specifically at least three, and more specifically at least four, narrow individual predetermined frequency bands.

If on the other hand only a specific part of the apparatus needs monitoring from a vibration alert or maintenance perspective, it may be sufficient with a single individual predetermined frequency band selection to match the specific operating frequency of said part.

Monitoring of operating hours and/or vibration alerts based on measured vibrations can be incorrect if noise vibrations are not identified and filtered. If noise vibrations are not filtered they may be mistaken for the apparatus running and consequently add to the counted running hours, even though the apparatus is not running. Similarly, vibration level alerts may be triggered caused by vibration noise.

A noise-free or noise-attenuated frequency spectrum pattern of an apparatus may for example be predetermined, e.g. a default frequency spectrum pattern, applicable to all apparatuses of the same type. Alternatively, a noise-free or noise-attenuated frequency spectrum pattern of a specific apparatus may for example be determined by the vibration detection unit 11 in connection with manufacturing or assembly of the apparatus 1 in a relatively noise-free environment, such as a testing facility, and data of the frequency spectrum pattern of a specific apparatus may then be enclosed with the apparatus, pre-stored in a data memory of the apparatus, downloaded by an end user or automatically obtained by a vibration alert software or predictive maintenance software.

Alternatively, a noise-free or noise-attenuated operating environment frequency spectrum pattern of a specific apparatus may for example be determined in-situ, meaning after proper installation at the destination site.

Consequently, the initialisation step S0 may additionally include a learning process, in which a frequency spectrum pattern of a specific apparatus is identified. This learning process is for example performed in a noise-free or noise-attenuated operating environment, i.e. an operating environment with less vibration noise than normal operating conditions. Such noise-free or noise-attenuated operating environment is for example obtained when some or all of adjacent and/or surrounding vibration noise sources are temporarily stopped or operating with reduced load or speed.

Still more alternatively, a noise-free or noise-attenuated frequency spectrum pattern of a specific apparatus may be identified in a learning process involving a first substep of detecting vibration data during one or more normal operating conditions while also the apparatus is running, thereby obtaining a mixed vibration signal comprising apparatus vibrations and noise vibrations, and additionally detecting vibration data during one or more normal operating conditions while the apparatus is stopped, thereby obtaining a vibration signal comprising only noise vibrations. Thereafter, in a second substep of the learning process, the frequency spectrum pattern of a specific apparatus is identified analytically by subtracting the detected vibration signal from the detected mixed vibration signal.

When the frequency spectrum pattern of the apparatus is known, the analysis of a plurality of selected narrow individual predetermined frequency bands for determining whether the apparatus is running or not, and/or for triggering an vibration level alert is simplified, because if the apparatus is not running and the monitored vibrations are caused by some other equipment nearby, the frequency spectrum pattern will be different from the predetermined or learned pattern. For example, the vibration noise pattern will generally not have the same significant peaks for the specific components as shown in figure 5. Thereby the vibrations can be identified as not coming from the apparatus, but as noise from other equipment and it can be concluded, that even though vibrations are registered, the pump is not running.

One part of the third step S3 of performing an analysis of a plurality of narrow individual predetermined frequency bands may involve applying a window, i.e. windowing technique, for improved signal clarity of the frequency spectrum. The selected window function may for example be Hanning window, thereby simplifying the analysis required for determining whether the apparatus is running or not, and/or for triggering an alert when a maximal magnitude of the frequency spectrum within any of said frequency bands exceeds a corresponding individual threshold value.

As mentioned above, the method may involve monitoring of total accumulated number of operation starts and/or total accumulated operating time of the apparatus. According to some example embodiments, as described with reference to figure 9, the third step S3 of performing an analysis of a plurality of narrow individual predetermined frequency bands may then involve performing a matching analysis of the plurality of narrow individual predetermined frequency bands of the obtained frequency spectrum for determining whether the obtained frequency spectrum corresponds to a frequency spectrum of the apparatus. The method may then also involve a fourth step S4 of updating the total accumulated number of operation starts and/or total accumulated operating time of the apparatus based on the result of matching analysis.

Hence, a record of the total accumulated number of operation starts and/or total accumulated operating time of the apparatus may be continuously updated for based on the result of each iteration of the method.

According to some example embodiments, said matching analysis for determining whether the apparatus is running or not involves performing a matching analysis of the obtained frequency spectrum within the plurality of narrow individual predetermined frequency bands for determining whether the obtained frequency spectrum corresponds to a frequency spectrum of the apparatus.

The matching analysis thus involves extracting one or more characteristic features of the obtained frequency spectrum within the plurality of narrow individual predetermined frequency bands and comparing this one or more characteristic features with one or more known characteristic features. If they match, the detected frequency likely stems of the apparatus and it may be concluded that the apparatus is running. Such comparison of characteristic features in the frequency domain spectrum may be implemented by a pattern recognition algorithm. Moreover, additional digital filters in the frequency domain may be provided for further improving the pattern recognition accuracy.

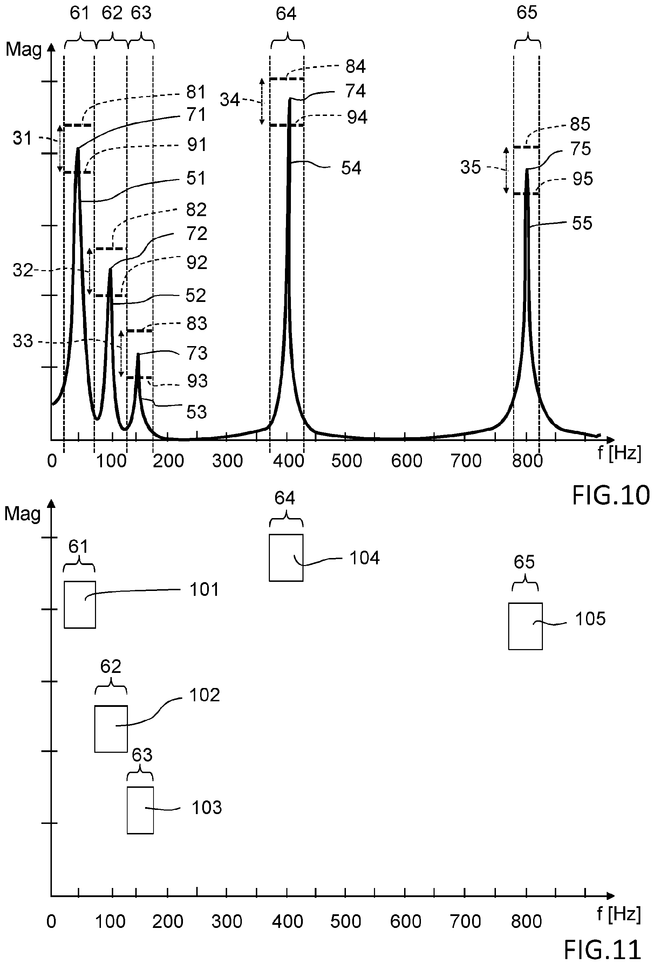

One example embodiment of the matching analysis is described below with reference to figures 10 and 11, wherein the step of performing the matching analysis involves comparing, for each of the plurality of narrow individual predetermined frequency bands 61-65 of the frequency spectrum, a maximal magnitude 71-75 of the frequency spectrum within the specific frequency band 61-65 with a corresponding individual magnitude range 31-35, and determining that the apparatus 1 is running when all said maximal magnitudes 71-75 of the frequency spectrum are located within the corresponding individual magnitude ranges 31-35, and determining that the apparatus 1 is not running when any of said maximal magnitudes 71-75 of the frequency spectrum are located outside of the corresponding individual magnitude ranges 31-35.

Each of the individual magnitude ranges 31-35 is defined by an upper magnitude threshold level 81-85 and a lower magnitude threshold level 91-95, which may be predetermined or selected depending on the specific circumstances of each implementation, specifically in view of the vibration noise level of the particular installation. Reliable and accurate detection of a running apparatus should preferably be possible even when for example a broad band vibration noise (white noise) and/or a large magnitude noise peak interacts with the inherent vibration of apparatus, such that a resulting frequency spectrum of the apparatus has a somewhat higher or lower peaks than the frequency spectrum of the apparatus when operating in isolation, i.e. without vibration noise, due to constructive or destructive behaviour of apparatus vibrations and noise vibrations.

For example, in general, the upper magnitude threshold levels 81-85 may be set to about 5 - 25 % higher value than the corresponding maximal magnitude 71-75 of the frequency spectrum, and the lower magnitude threshold level 91-95 may be set to about 5 - 25 % lower value than the corresponding maximal magnitude 71-75 of the frequency spectrum.

Moreover, reliable and accurate detection of a running apparatus should preferably be possible taking into account possible defects or incidents occurring during long term use of the apparatus that cause increase in rotational unbalance of the apparatus, for example due to damages to the rotating equipment of the apparatus. Such increase in rotational unbalance results typically results in increased inherent vibrations of the apparatus. Consequently, the upper magnitude threshold levels 81-85 may be set to about 5 - 200 % higher value than the corresponding maximal magnitude 71-75 of the frequency spectrum, while the lower magnitude threshold level 91-95 may be set to about 5 - 25 % lower value than the corresponding maximal magnitude 71-75 of the frequency spectrum.

In other words, the individual magnitude range 31-35 of one or more of the plurality of narrow individual predetermined frequency bands 61-65 of the frequency spectrum may be unsymmetrical with respect to the maximal magnitude 71-75 of the frequency spectrum. In particular, the individual magnitude range 31-35 of one or more of the plurality of narrow individual predetermined frequency bands 61-65 of the frequency spectrum may have a upper magnitude threshold levels 81-85 that is located significantly further displaced from said maximal magnitude 71-75 of the frequency spectrum than the lower magnitude threshold level 91-95. In fact, the individual magnitude range 31-35 of one or more of the plurality of narrow individual predetermined frequency bands 61-65 of the frequency spectrum may even be openended ranges upwards, i.e. completely lacking an upper magnitude threshold levels 81-85, and merely having a lower magnitude threshold level 91-95.

If a large magnitude noise peak interacts with a peak of the frequency spectrum of the apparatus in any of the selected individual predetermined frequency bands, such that a resulting (mixed) frequency spectrum of the apparatus and noise changes significantly, such as for example more than about 10% or 25%, said specific selected individual predetermined frequency band may need to be removed from a set of selected individual predetermined frequency bands, because reliable detection of operation of the apparatus may then not be possible due to vibration noise.

According to some example embodiments, the position of the upper and lower magnitude threshold levels 81-85, 91-95 of each individual magnitude range 31-35 of the frequency spectrum, is determined based on a noise-free or noise-attenuated environment vibration data. Thereby, it may be avoided that potentially strong noise vibrations in certain frequencies may negatively influence reliable and accurate interpretation of the obtained mixed vibration signal, e.g. distorting the frequency spectrum pattern so that operation or stillstand of the apparatus no longer can be reliably discerned.

The term noise-free or noise-attenuated environment vibration data herein refers to vibration data of the apparatus that has a reduced level of noise vibration compared with vibration data obtained by the vibration detection unit during simultaneous operation of the apparatus with other, adjacent or surrounding, apparatuses or equipment during normal operating condition after installation of the apparatus at the destination site.

In some example embodiments, the corresponding individual magnitude range 31-35, for each of the plurality of narrow individual predetermined frequency bands 61-65 of the frequency spectrum, is centred around the maximal magnitude 71-75 of the frequency spectrum, as derived from said noise-free or noise-attenuated environment vibration data.

Figure 11 schematically illustrates an example embodiment of a frequency spectrum pattern that is deemed corresponding to operation of the apparatus, wherein first to fifth frames 101-105 are arranged in a certain pattern. Each of these frames or regions of the frequency spectrum may for example be defined by one of the first to fifth frequency bands 61-65 and one corresponding set of upper magnitude threshold levels 81-85 and lower magnitude threshold level 91-95. In other words, the first frame 101 is defined by the first frequency band 61, the first upper magnitude threshold level 81 and a first lower magnitude threshold level 91, and so forth.

When an obtained frequency spectrum from the apparatus has a pattern that matches the frame pattern of figure 11, i.e. when the obtained frequency spectrum from the apparatus is present in all of said first to fifth frames 101-105, it can be concluded that the apparatus is running.

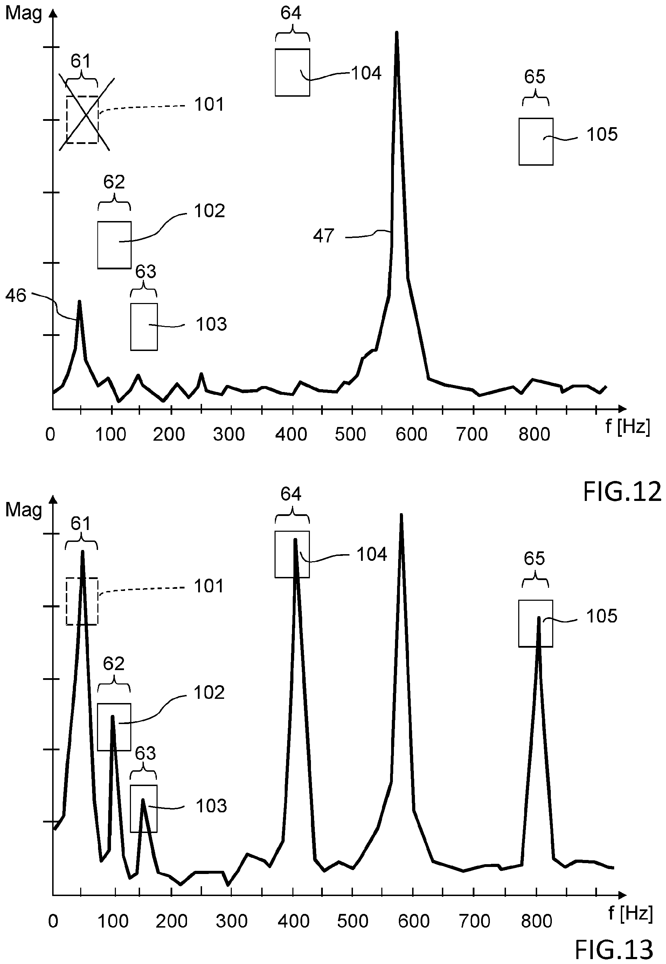

Merely for illustration purpose, one example embodiment of the functionality of the frequency spectrum pattern recognition method is described below with reference to figure 12 and 13. Assuming that the frequency spectrum pattern of figure 10 corresponds to the operation of the apparatus in a noise-free or noise-attenuated environment, e.g. with adjacent vibrating equipment temporarily in stopped stated. Assuming also that the frequency spectrum of the combined adjacent vibrating equipment when in operation, while the apparatus 1 to be monitored is temporarily stopped, corresponds to frequency spectrum pattern of figure 12, i.e. with a low magnitude white nose spread over the entire frequency range and with a low magnitude peak 46 at about 50Hz and a high magnitude peak 47 at about 600 Hz.

The resulting frequency spectrum obtained by the vibration detection unit 11 during joint operation of the apparatus and surrounding noise generating equipment may then have a pattern as illustrated in figure 13.

The selected set of narrow individual predetermined frequency bands of the obtained frequency spectrum are the second to fifth frequency bands 62-65, and the first frequency band 61 is not included by the method due to interference between the first peak 51 and the low magnitude noise peak 46. Consequently, the first frame 101 is omitted from the set of frames 102-105 used for detecting operation of the apparatus.

In figure 12, the apparatus is stopped and the method can clearly detect this because the magnitude of the frequency spectrum does not reach the level of the second to fifth frames 102-105. In figure 13 on the other hand, the apparatus is running and the method can clearly detect this because the magnitude of the frequency spectrum reaches the levels of each of the second to fifth frames 102-105.

The method is not only related to a solution for reliable and straightforward detection of apparatus operating mode, but also for vibration level monitoring for managing and updating a predictive maintenance plan and high vibration alert triggering.

With reference again to figure 6 and figure 7, the third step S3 of performing an analysis of a plurality of narrow individual predetermined frequency bands may involve comparing, for each of the plurality of narrow individual predetermined frequency bands 61-65 of the frequency spectrum, the maximal magnitude 71-75 of the frequency spectrum within the specific frequency band 61-65 with a corresponding individual threshold value 21-25, and triggering an alert when any of said maximal magnitudes 71-75 of the frequency spectrum exceeds a corresponding individual threshold value 21-25.

According to some example embodiments, said triggering of an alert is performed first after any of said maximal magnitudes 71-75 of the frequency spectrum exceeds a corresponding individual threshold value 21-25 during two or more consecutive iterations of method steps S1 - S3. Thereby, an accidental vibration alert caused by extraordinary or highly temporary circumstances may be avoided.

Moreover, a more detailed information about the operating condition of the apparatus may be provided by the monitoring method when the method include, for any single frequency band 61-65, at least two threshold values at different vibration magnitude levels, because thereby a at least two different types of alerts may be triggered.

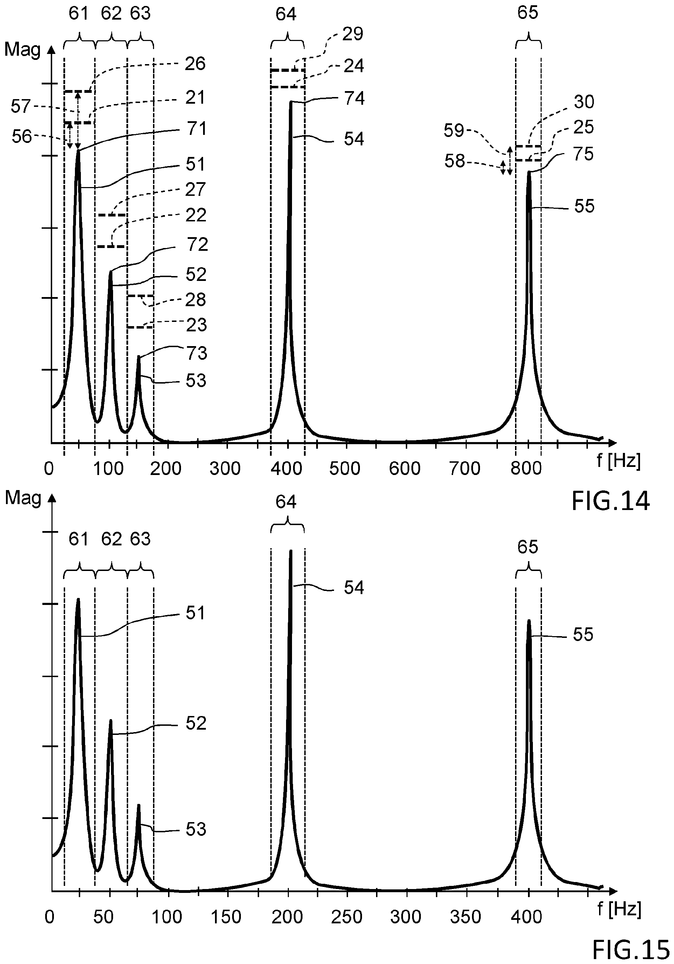

Such a scenario is schematically illustrated in figure 14, wherein at least one, specifically all, of the plurality of narrow individual predetermined frequency bands 61-65 is associated with at least a first corresponding individual threshold value 21-25 reflecting a first level of maintenance urgency, and a second corresponding individual threshold value 26-30 reflecting a second level of maintenance urgency that is more urgent than the first level, wherein the method comprises triggering a first type of alert reflecting a relative low level of maintenance urgency when the maximal magnitude 71-75 of the frequency spectrum within the specific frequency band 61-65 exceeds the first corresponding individual threshold value 21-25, and wherein the method comprises triggering a second type of alert reflecting a relative high level of maintenance urgency when the maximal magnitude 71-75 of the frequency spectrum within the specific frequency band exceeds the second corresponding individual threshold value 26-30.

Furthermore, as schematically illustrated in figure 14, the two alert level approach of vibration monitoring may not only provide two vibration level alerts for different levels 21-25, 26-30 of vibration magnitudes, but also with individually internal offset from maximal magnitude 71-75. For example, the natural frequency of the apparatus at 50Hz may be deemed less critical from a maintenance or alert perspective compared with the frequency of for example the seal at 800 Hz.

Therefore, the first individual threshold value 21 of the first frequency band 61 may be arranged at a first offset distance 56 from the maximal magnitude 71 of the frequency spectrum within the first frequency band 61, and the first individual threshold value 25 of the fifth frequency band 65 may be arranged at a second offset distance 58 from the maximal magnitude 75 of the frequency spectrum within the fifth frequency band 65, wherein the first offset distance 56 is larger than the second offset distance 58. Similarly, the second individual threshold value 26 of the first frequency band 61 may be arranged at a third offset distance 57 from the maximal magnitude 71 of the frequency spectrum within the first frequency band 61, and the second individual threshold value 30 of the fifth frequency band 65 may be arranged at a fourth offset distance 59 from the maximal magnitude 75 of the frequency spectrum within the fifth frequency band 65, wherein the third offset distance 57 is larger than the fourth offset distance 59.

As a result, the acceptable increase in vibration level before the first or second alert levels 21-25, 26-30 are triggered is different with respect to the vibration associated with the natural frequency of the apparatus and the seal.

As mentioned above, the initialisation step S0 may involve selecting at least two, specifically at least three, and more specifically at least four, narrow individual predetermined frequency bands. In particular, the initialisation step S0 may involve selecting the narrow individual predetermined frequency bands to match at least two, specifically at least three, and more specifically at least four, magnitude peaks of the frequency spectrum as derived from noise-free or noise-attenuated environment vibration data. The magnitude peaks of the frequency spectrum, in particular the individual frequency and magnitude of said peaks, are very characteristic for frequency spectrum pattern of the apparatus, and may thus be particularly suitable for serving as characteristic features. Moreover, vibration noise often does not reach the same magnitude levels of the maximal magnitudes 71-75 of the peaks 51-55 of the frequency spectrum, thereby making these maximal magnitudes specifically resistant to vibration noise disturbance.

For the same reason, it may often be suitable to ignore the part or parts of the obtained frequency spectrum that are located outside the plurality of selected narrow individual predetermined frequency bands, i.e. outside of the peaks of the apparatus, because the frequency spectrum is more difficult to distinguishing from vibration noise in these areas of the frequency spectrum.

In some example embodiments, the method additionally comprises adjusting the location of the plurality of selected narrow individual predetermined frequency bands 61-65 of the obtained frequency spectrum as a function of rotational speed of the rotating equipment of the apparatus 1, in particular as a function that is proportional to the rotational speed of the rotating equipment of the apparatus. For example, if the apparatus associated with the frequency spectrum of figure 6 would be controlled the reduce the speed by half, the first to fifth frequency bands 61-65 would be adjusted to be arranged at half the frequency as before, i.e. 25, 50, 75 Hz, 200 Hz and 400 Hz, respectively.

Similarly, also the magnitude of the peaks of the frequency spectrum of the obtained vibrations signal from the vibration detection unit 11 may alter in response to various changes of the operating setting of the apparatus. For example, the vibration magnitude of a constant speed variable displacement pump will change as a function of pump displacement, with relatively low vibrations in low displacement operating state and relatively high vibrations in high displacement operating state. In addition, the vibration magnitude of for example a mixer will typically change as a function of mixer speed, with relatively low vibrations in low speed operating state and relatively high vibrations in high speed operating state.

In other words, the method comprises adjusting the corresponding individual threshold value or values, e.g. upper and lower magnitude threshold levels 81-85, 91-95, vibration level alert threshold levels 21-25, 26-30, of each narrow individual predetermined frequency bands as a function of a variable operating setting of the apparatus, in particular as a function of a variable operating load of the apparatus. Thereby, a more reliable and accurate detection of operating state and vibration level alerts may be obtained.

With reference again to figure 3, the monitoring system for monitoring operating condition of an apparatus including a rotating equipment comprises a vibration detecting unit 12 configured for being mounted on the apparatus 1, and an electronic control system operatively connected to a vibration detection sensor 12 of the vibration detecting unit. The electronic control system is configured for performing the following steps repeated at certain time intervals: recording vibration data by the vibration detecting unit at a certain sampling frequency, which vibration data is representative of a vibration acceleration of the rotating equipment; obtaining a frequency spectrum of the vibration data by converting the vibration data using Fourier transform operation to a representation in a frequency domain; and performing an analysis of a plurality of selected narrow individual predetermined frequency bands of the obtained frequency spectrum for determining whether the apparatus is running or not, or for triggering an alert when a maximal magnitude of the frequency spectrum within any of said frequency bands exceeds a corresponding individual threshold value.

The electronic control system may correspond to the electronic controller 13 of the vibration detection unit 11. Alternatively, the electronic control system may correspond to a remote cloud computing application 14, such as a remote server, smartphone 16, mobile computing device 16, or the like. Still more alternatively, some steps of the method, such as the recording vibration data, may be controlled and performed by the electronic controller 13 of the vibration detection unit 11, and some other parts of the method, such as converting the vibration data using Fourier transform operation to a representation in a frequency domain and performing an analysis of a plurality of selected narrow individual predetermined frequency bands, may be controlled and performed by the remote cloud computing application 14.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof.

Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

## Claims

1. A method for monitoring operating condition of an apparatus (1) comprising a rotating equipment, the method comprising the following steps repeated at certain time intervals:
recording vibration data by a vibration detecting unit (11) associated with the apparatus (1) at a certain sampling frequency, which vibration data is representative of a vibration acceleration of the rotating equipment;
obtaining a frequency spectrum of the vibration data by converting the vibration data using Fourier transform operation to a representation in a frequency domain; and
performing an analysis of a plurality of selected narrow individual predetermined frequency bands (61-65) of the obtained frequency spectrum for determining whether the apparatus (1) is running or not, and/or for triggering an alert when a maximal magnitude of the frequency spectrum within any of said frequency bands (61-65) exceeds a corresponding individual threshold value (21-30).

2. The method according to claim 1,
wherein the method involves monitoring total accumulated number of operation starts and/or total accumulated operating time of the apparatus (1);
wherein the step of performing an analysis of a plurality of narrow individual predetermined frequency bands (61-65) involves: performing a matching analysis of the obtained frequency spectrum within the plurality of narrow individual predetermined frequency bands (61-65) for determining whether the obtained frequency spectrum corresponds to a frequency spectrum of the apparatus (1) for determining whether the apparatus (1) is running or not; and
wherein the method further comprises a step of updating the total accumulated number of operation starts and/or total accumulated operating time of the apparatus (1) based on the result of matching analysis.

3. The method according to claim 2, wherein the step of performing the matching analysis of the obtained frequency spectrum within the plurality of narrow individual predetermined frequency bands (61-65) for determining whether the obtained frequency spectrum corresponds to a frequency spectrum of the apparatus (1) involves comparing, for each of the plurality of narrow individual predetermined frequency bands (61-65) of the frequency spectrum, the maximal magnitude (71-75) of the frequency spectrum within the specific frequency band (61-65) with a corresponding individual magnitude range (31-35), and determining that the apparatus (1) is running when all said maximal magnitudes (71-75) of the frequency spectrum are located within the corresponding individual magnitude range (31-35), and determining that the apparatus (1) is not running when any of said maximal magnitudes (71-75) of the frequency spectrum are located outside of the corresponding individual magnitude range (31-35).

4. The method according to claim 3, wherein a position of upper and lower magnitude threshold levels (81-85, 91-95) of each individual magnitude range (31-35) of the frequency spectrum, is determined based on noise-free or noise-attenuated environment vibration data.

5. The method according to claim 4, wherein the corresponding individual magnitude range (31-35), for each of the plurality of narrow individual predetermined frequency bands (61-65) of the frequency spectrum, is centred around the maximal magnitude (71-75) of the frequency spectrum, as derived from said noise-free or noise-attenuated environment vibration data.

6. The method according to any of the preceding claims 1 - 5, wherein the step of performing an analysis of a plurality of narrow individual predetermined frequency bands (61-65) involves: comparing, for each of the plurality of narrow individual predetermined frequency bands (61-65) of the frequency spectrum, the maximal magnitude (71-75) of the frequency spectrum within the specific frequency band (61-65) with a corresponding individual threshold value (21-25), and triggering an alert when any of said maximal magnitudes (71-75) of the frequency spectrum exceeds a corresponding individual threshold value (21-25).

7. The method according to any of the preceding claims 1 - 6,
wherein at least one of the plurality of narrow individual predetermined frequency bands (61-65) is associated with at least a first corresponding individual threshold value (21-25) reflecting a first level of maintenance urgency, and a second corresponding individual threshold value (26-30) reflecting a second level of maintenance urgency that is more urgent than the first level;
wherein the method comprises triggering a first type of alert reflecting a relative low level of maintenance urgency when the maximal magnitude of the frequency spectrum within the specific frequency band exceeds the first corresponding individual threshold value (21-25); and
wherein the method comprises triggering a second type of alert reflecting a relative high level of maintenance urgency when the maximal magnitude (71-75) of the frequency spectrum within the specific frequency band exceeds the second corresponding individual threshold value (26-30).

8. The method according to any of the preceding claims 1 - 7, comprising selecting the narrow individual predetermined frequency bands (61-65) to match at least two, specifically at least three, and more specifically at least four, magnitude peaks (51-55) of the frequency spectrum as derived from a noise-free or noise-attenuated environment vibration data.

9. The method according to any of the preceding claims 1 - 8, comprising selecting at least two, specifically at least three, and more specifically at least four, narrow individual predetermined frequency bands (61-65).

10. The method according to any of the preceding claims 1 - 9, wherein each selected narrow frequency band (61-65) has a width of 5 - 100 Hz, specifically 7 - 75 Hz, and more specifically 10 - 50 Hz.

11. The method according to any of the preceding claims 1 - 10, comprising selecting the narrow individual predetermined frequency bands (61-65) to match the operating vibration frequency generated by at least two, specifically at least three, and more specifically at least four, individual parts of the rotating equipment.

12. The method according to any of the preceding claims 1 -11, comprising adjusting the location of the plurality of selected narrow individual predetermined frequency bands (61-65) of the obtained frequency spectrum as a function of rotational speed of the rotating equipment of the apparatus (1).

13. The method according to any of the preceding claims 1 - 12, comprising adjusting the corresponding individual threshold value(s) (21-30) of each narrow individual predetermined frequency bands (61-65) as a function of a variable operating setting of the apparatus (1), in particular as a function of a variable operating load of the apparatus (1).

14. A monitoring system for monitoring operating condition of an apparatus (1) including a rotating equipment, the system comprises:
a vibration detecting unit (11) configured for being mounted on the apparatus (1); and
an electronic control system operatively connected to a vibration detection sensor (12) of the vibration detecting unit (11),
wherein the electronic control system is configured for performing the following steps repeated at certain time intervals:
recording vibration data by the vibration detecting unit (11) at a certain sampling frequency, which vibration data is representative of a vibration acceleration of the rotating equipment;
obtaining a frequency spectrum of the vibration data by converting the vibration data using Fourier transform operation to a representation in a frequency domain; and
performing an analysis of a plurality of selected narrow individual predetermined frequency bands (61-65) of the obtained frequency spectrum for determining whether the apparatus (1) is running or not, or for triggering an alert when a maximal magnitude (71-75) of the frequency spectrum within any of said frequency bands (61-65) exceeds a corresponding individual threshold value (21-30).

15. An apparatus (1) including a rotating equipment and comprising a monitoring system according to claim 14.
